# EUROPEAN PATENT SPECIFICATION

(11) **EP 2 934 730 B1**
(45) Date of publication and mention of the grant of the patent: **25.09.2019**
(21) Application number: 13865320.9
(22) Date of filing: 20.12.2013
(51) Int. Cl.: B01F 3/08, B01F 15/04, G01N 1/30, G01N 1/31, G01N 35/00, B01L 3/00, G01N 1/38

(54) **METHOD OF PRODUCING A REAGENT ON-BOARD AN INSTRUMENT**
VERFAHREN ZUR HERSTELLUNG EINES REAGENS AN BORD EINES INSTRUMENTS
PROCÉDÉ DE PRODUCTION D'UN RÉACTIF DANS UN INSTRUMENT

(30) Priority: 21.12.2012 US 201261745331 P
(43) Date of publication of application: 28.10.2015
(73) Proprietor: Leica Biosystems Melbourne Pty Ltd, Mt Waverley, VIC 3149 (AU)
(72) Inventor: BAGNATO, Stephen, John, Mt Waverley, Victoria 3149 (AU)
(74) Representative: m patent group
(86) International application number: PCT/AU2013/001499
(87) International publication number: WO 2014/094062

(56) References cited:
- WO-A1-2012/006185
- WO-A2-00/48735
- DE-A1- 2 711 853
- US-A- 3 545 935
- US-A- 4 263 256
- US-A1- 2004 033 554
- US-B1- 6 746 851
- US-B1- 7 718 435
- US-B2- 8 142 739

## Description

### Field of the Invention

The present invention relates broadly to a method of producing a reagent on-board an instrument such as a laboratory instrument for treating a biological tissue sample with the reagent. The invention also relates generally to an instrument utilising a reagent produced on-board the instrument from a mixture of a concentrate and a diluent. The invention further relates broadly to a concentrate dispenser operatively coupled to such an instrument for on-board production of an instrument reagent.

### Background to the Invention

Immunohistochemical staining and in situ nucleic acid analysis are tools used in histological diagnosis and the study of tissue morphology. Immunohistochemical staining relies on the specific binding affinity of antibodies with epitopes in tissue samples, and the increasing availability of antibodies which bind specifically with unique epitopes present only in certain types of diseased cellular tissue. Immunohistochemical staining involves a series of treatment steps conducted on a tissue sample (typically a section) mounted on a glass slide to highlight, by selective staining, certain morphological indicators of disease states.

Typical treatment steps include pretreatment of the tissue sample to reduce nonspecific binding, antibody treatment and incubation, enzyme labelled secondary antibody treatment and incubation, substrate reaction with the enzyme to produce a fluorophore or chromophore highlighting areas of the tissue sample having epitopes binding with the antibody, counterstaining, and the like. Between each treatment step, the tissue sample must be rinsed to remove unreacted residual reagent from the prior step. Most treatment steps involve a period of incubation typically conducted at ambient temperature of around 25°C up to around 40°C, while cell conditioning steps are typically conducted at somewhat higher temperatures, e.g. 90°C to 100°C. In-situ DNA analysis relies upon the specific binding affinity of probes (DNA binding proteins) with unique nucleotide sequences in cell or tissue samples and similarly involves a series of process steps, with a variety of reagents and process temperature requirements. Some specific reactions involve temperatures up to 120°C to 130°C.

In these various treatment steps it is understood that no single concentration of antibody is sufficient to account for tissue variations, processing variability and tissue sample thickness. Reagents are provided in a Ready to Use (RTU) format that cannot be varied in concentration. Alternatively, concentrates are supplied and diluted to achieve a range of staining options. However, these approaches do not address increasing customer need for workflow flexibility with ease of reagent uses.

US 2004/0033554 A1 is directed to an improved liquid handling machine capable of regulating the temperature of assay compounds in the automated preparation of culture trays for biological assays. The machine includes a horizontally movable table with a plurality of stations to prepare samples for assay. The table is positioned beneath a vertically movable head adapted to hold a plurality of pipettes which aspirate and expel liquid to transfer and mix assay compounds between the stations of the table:
WO 2012/006185 A1 describes a reagent preparation assembly configured to reconstitution of a reagent into a specified amount of a reagent mixture. The assembly includes a reaction chamber having a reagent contained within a body. The assembly also includes a syringe having a solution reservoir and a plunger coupled to the reaction chamber through a body. When the plunger is depressed, the syringe dispenses solution from a reservoir for reconstitution of the reagent.

US 8 142 739 B2 describes an automated stain system and a reagent container designed for use in an autostainer having a probe. The reagent container includes a specifically designed reagent containment section capable of containing a volume of a reagent.

### Summary of the Invention

According to a first aspect of the invention there is provided an instrument for producing a reagent according to claim 1.

The instrument includes one or more mixing wells located on the instrument and configured to receive the concentrate and the diluent for mixing to provide the reagent at the required concentration. The mixing well is formed in a sample staining module (SSM) of the instrument. Further, the mixing well is formed in a fixed or disposable cover member of the SSM. In an alternative configuration not forming part of the claimed invention the mixing well is a dedicated mixing well formed integral with the instrument.

Preferably the mixing wells are located adjacent one another for serial dilution of the concentrate with the diluent. Alternately the instrument includes a probe having an in-line mixing chamber adapted to receive the concentrate and the diluent to provide the reagent at the required concentration.

Preferably the concentrate chamber is a container supplied in a sealed condition and adapted to contain a predetermined volume of the concentrate. More preferably the sealed container includes a sealing membrane arranged to contain the concentrate and an inert gas. Even more preferably the sealing membrane is designed to be at least partly removed or pierced and the container is sized for addition of diluent for mixing on-board the instrument to provide the reagent at the required concentration. Alternatively or additionally the concentrate chamber comprises a plurality of the sealed containers each adapted to contain a predetermined volume of the concentrate. In this embodiment the plurality of chambers are arranged as multiple reservoirs in a blister pack. In another embodiment the concentrate chamber is a disposable or reusable probe tip containing the concentrate and adapted to fit to a dispensing probe of the instrument.

According to a second aspect of the invention there is a concentrate dispenser according to claim 2. The concentrate dispenser is operatively coupled to the instrument according to the first aspect of the invention for on-board provision of a reagent, said dispenser comprising packaging adapted to contain a plurality of concentrate capsules, the packaging configured to release each of the capsules for mixing with a diluent on-board the instrument to provide the reagent at the required concentration.

Preferably the packaging includes a stacked cartridge adapted to contain one or more columns of the plurality of concentrate capsules. In some embodiments two or more columns of the concentrate capsules are provided in the cartridge. More preferably the dispenser also comprises a reciprocating release operatively coupled to the stacked cartridge to release a lowermost of the column of capsules form the cartridge for mixing with the diluent on-board the instrument. Alternatively the packaging includes a cartridge reel adapted to contain a roll of the concentrate capsules retained in a concentrate tape configured to be dispensed from the cartridge reel. In this embodiment the concentrate tape includes two strips adhered to one another with the concentrate capsules sandwiched therebetween and adapted to be released from the concentrate tape.

According to another aspect of the present disclosure there is provided an instrument utilising a reagent, said instrument including:
a diluent chamber adapted to contain a diluent;
a concentrate dispenser operatively coupled to the diluent chamber to dispense concentrate for mixing with the diluent on-board the instrument to produce the reagent at a required concentration.

Preferably the concentrate is contained in dissolvable capsules designed to dissolve during mixing with the diluent to produce the reagent. In this embodiment the diluent is acidic or basic depending on the concentrate, and the dissolvable capsules are formed at least in part of a material which dissolves in the acidic or basic diluent.

Preferably the diluent chamber is a vacuum chamber to which the concentrate dispenser is operatively coupled wherein the concentrate is dispensed into the vacuum chamber with the assistance of vacuum pressure applied to the diluent chamber. Alternatively the concentrate dispenser includes a plunger for dispensing of the concentrate into the diluent chamber, preferably via a non-return valve. Still alternatively the concentrate dispenser includes a frangible separator which cooperates with the diluent chamber wherein rupturing of the frangible separator effects dispensing of the concentrate to the diluent chamber.

Generally the instrument is a laboratory instrument and the reagent is a high value reagent such as a molecular probe such as a nucleic acid probe or an antibody (Ab). The concentrate may be in any state such as a liquid, solid, or lyophilised state.

According to a third aspect of the invention there is provided a method according to claim 10 of producing a reagent on-board an instrument, said method including the steps of:
providing a concentrate at the instrument;
discharging the concentrate into a diluent provided at the instrument, or *vice versa;*
mixing the concentrate with the diluent on-board the instrument to provide the reagent at a required concentration.

In one embodiment the method may also comprise one or more subsequent steps of diluting the reagent with additional diluent to produce the required concentration.

According to another aspect of the present disclosure there is provided packaging for use with an instrument in the on-board provision of a reagent, the packaging being adapted to contain a plurality of concentrate capsules, and configured to release each of the capsules for mixing with a diluent on-board the instrument to provide the reagent.

According to an embodiment of the instrument of the present invention the concentrate chamber is provided as a container in the on-board provision of a reagent, the container adapted to contain a predetermined volume of a concentrate for mixing with a diluent on-board the instrument to provide the reagent.

According to another aspect of the present disclosure there is provided a cover member for use with an instrument in the on-board provision of a reagent, the cover member including a well being adapted to receive a concentrate for mixing with a diluent on-board the instrument to provide the reagent.

### Brief Description of the Drawings

In order to achieve a better understanding of the nature of the present invention a preferred embodiment of an instrument utilizing a reagent will now be described, by way of example only, with reference to the accompanying drawings in which:
Figure 1 is a schematic of packaged concentrate dispensed into a cover member associated with a sample staining module (SSM) of an instrument having on-board production of the reagent according to an embodiment of one aspect of the invention;
Figures 2(a) and 2(b) are schematics of alternative embodiments of mixing wells or chambers designed for on-board production of reagents;
Figures 3(a) and 3(b) are schematics of alternative embodiments of concentrate chambers designed to be used in conjunction with the instrument of for example figure 1;
Figures 4(a) to 4(d) are schematics of different concentrate dispensers designed for the on-board provision of a reagent at an instrument according to embodiments of another aspect of the invention;
Figures 5(a) to 5(c) are schematics of packaged concentrates/diluents used to produce reagents on-board an instrument according to embodiments of a further aspect of the invention.

### Detailed Description

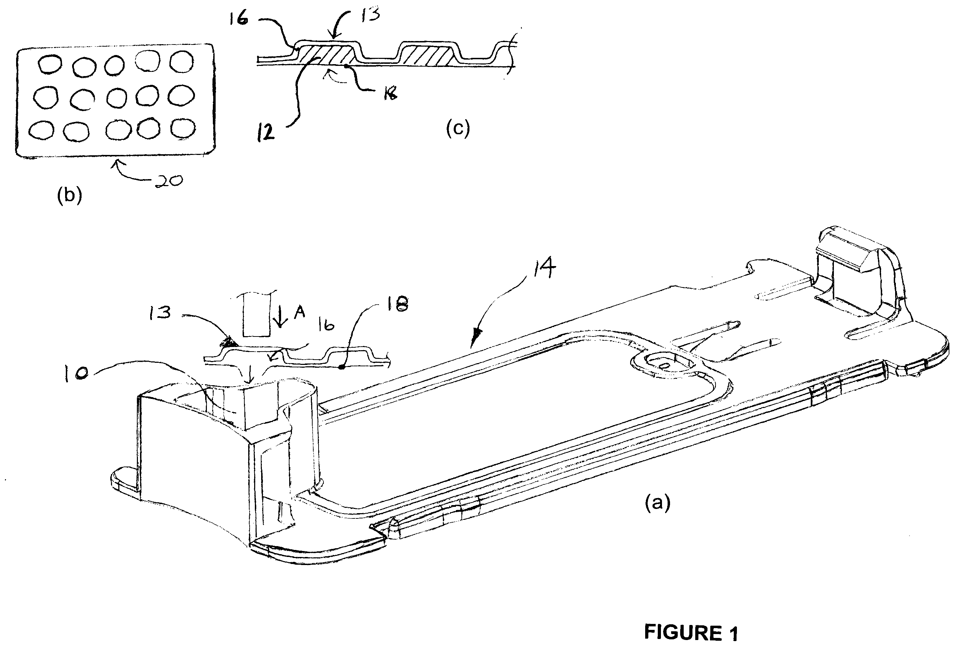

Figure 1 is a schematic illustration of a mixing well 10 associated with an instrument (not shown) for mixing a concentrate 12 with a diluent (not shown) on-board the instrument to provide a reagent at a required concentration. The mixing well 10 is in in the context of the claimed invention formed in a cover member 14 associated with a sample staining module (SSM) of the instrument. The cover member 14 may be releasably attachable to the SSM of the instrument. The mixing well in an alternative configuration not forming part of the claimed invention may be formed as an integral part of the instrument. The instrument of this aspect of the invention is a laboratory instrument for treating a biological tissue sample within the SSM with the reagent, typically in the form of a molecular probe such as a nucleic acid probe or an antibody (Ab). The high value reagent is produced at a desired concentration on-board the instrument by mixing the concentrate such as 12 and diluent to provide the reagent at the required concentration.

In the embodiment of figure 1 the concentrate 12 is provided in a sealed container 13. The sealed container 13 includes a sealing membrane 18 arranged to contain the concentrate 12 within a plurality of sealed chambers 16. The sealed container 13 of this example is in the form of a blister pack 20. The blister pack 20 is designed to release each of the concentrate volumes such as 12 into the well 10 of the cover member 14. The sealing membrane 18 which is in the form of a frangible foil is ruptured or otherwise broken or removed across an entry to the well 10 for release of the concentrate 12. The diluent may be pumped from a bulk supply into the well 10 either before or after addition of the concentrate to achieve the required concentration. The reagent is thus mixed and produced on-board the instrument. The reagent may then be drawn under the cover member 14 or aspirated using a robot and a fluid transport probe (not shown) and then dispensed through a port 9 into a reaction area 11 for treatment, such as staining.

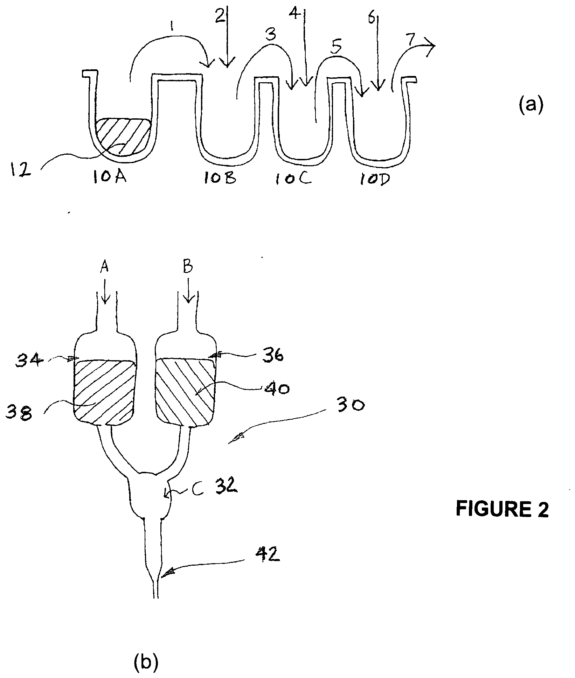

Figures 2(a) and 2(b) illustrate alternative embodiments suitable for production of a reagent on-board an instrument such as that including the cover member 14 of the previous embodiment of figure 1. For ease of reference and to avoid repetition, the same reference numerals have been used for similar components of this and any other embodiments. In the embodiment of figure 2(a) the instrument is provided with multiple mixing wells 10A to 10D for serial dilution of the concentrate 12. The reagent 12 is at stage 1 transferred to the mixing well 10B and at stage 2 diluted with diluent. The resulting reagent is mixed in the mixing well 10B and at stage 3 transferred to mixing well 10C for further dilution at stage 4 with diluent. The resulting reagent is mixed in mixing well 10C and at stage 5 transferred to mixing well 10D for further dilution with diluent at stage 6. The final reagent at its required concentration is at stage 7 transferred from the mixing well 10D for use by the instrument. It will be appreciated by those skilled in the art that the number of mixing wells required for each desired dilution may vary according to the required dilution. Accordingly, the number of mixing wells provided or utilized may vary according to the required dilution. The final reagent may for example be used in staining a tissue sample located on a slide (not shown) of the SSM. The multiple mixing wells 10A to 10D may be formed as an integral part of the instrument in for example the SSM or as shown in figure 1 fabricated in a fixed or disposable cover member of the SSM.

In the embodiment of figure 2(b) the instrument includes a probe 30 having an in-line mixing chamber 32. The probe is for example in the form of a fluid transfer probe (FTP) of an instrument used for treating or staining tissue samples on slides. The modified FTP 30 includes a diluent chamber 34 and a chamber 36 located up stream of the mixing chamber 32. The diluent and chambers 34/36 provide the requisite volume of diluent 38 and concentrate 40 to the mixing chamber 32 to provide a reagent at the required concentration. The FTP includes a nozzle 42 downstream of the mixing chamber 32 which is configured to dispense into a cover member of an SSM. The nozzle 42 may discharge reagent directly on to the sample slide or into a port of a cover member such as 14 (see figure 1) associated with the SSM. In one embodiment the instrument may incorporate a separate valve or valves (not shown) arranged on or adjacent to the mixing chamber.

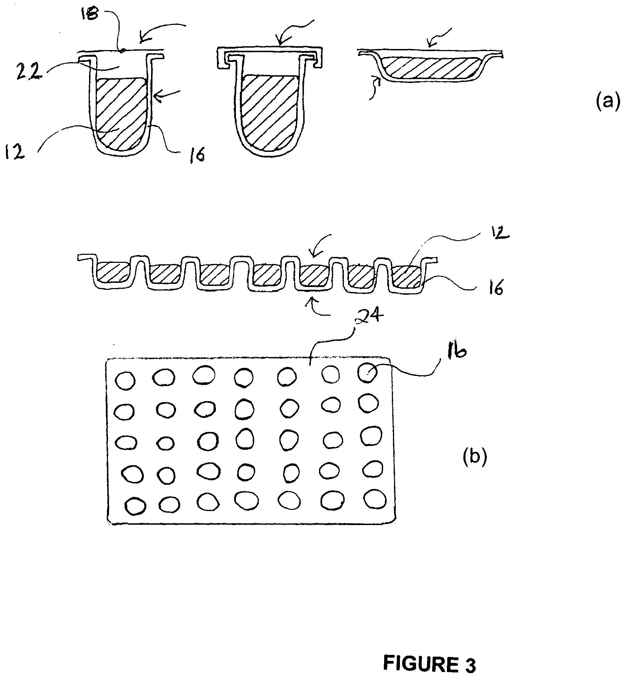

Figures 3(a) and 3(b) are alternate embodiments of a chamber suitable for use with an instrument providing on-board production of a reagent. The chambers may for example be suitable for use with the cover member 14 of the instrument of figure 1. In the various embodiments of figure 3(a) the concentrate such as 12 is contained in a chamber 16 which is sealed with a sealing membrane 18. The concentrate 12 is protected from evaporation and oxidation by the use of nitrogen or other inert gases 22 sealed within the chamber 16. The sealing membrane 18 may be in the form of a foil pack or lid seal. The embodiment of figure 3(b) is similar to the blister pack 20 of figure 1 having multiple chambers such as 16 in a common base plate 24. Although not shown the multiple chambers 16 may also be sealed with a common sealing membrane or foil.

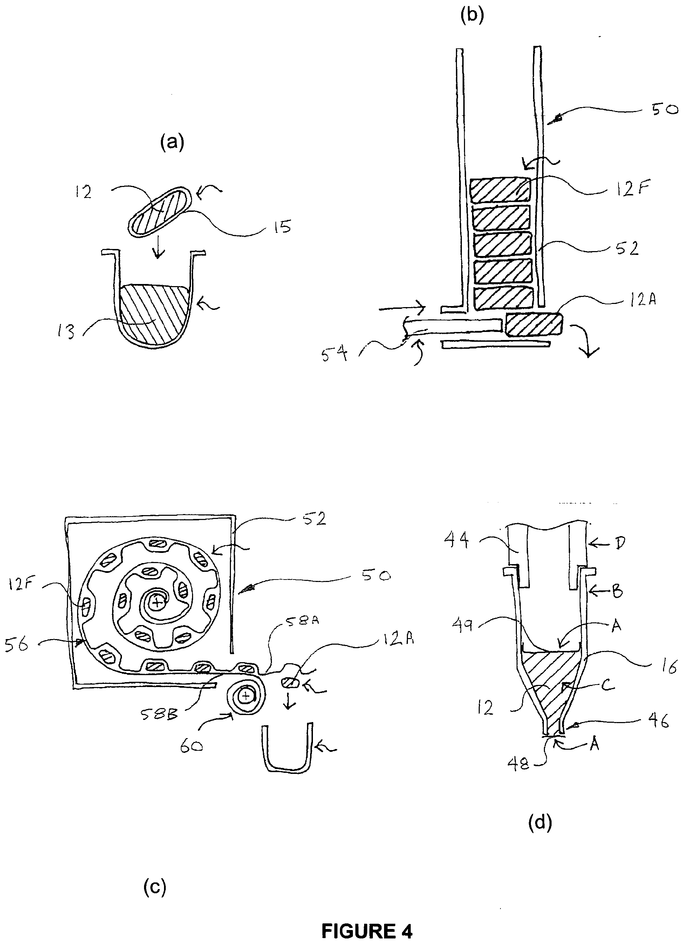

Figure 4(a) to 4(d) illustrate different embodiments of a concentrate dispenser for use on-board an instrument in production of a reagent, for example the reagent being used in staining or otherwise treating tissue samples in an SSM of the instrument. The embodiment of figure 4(a) schematically depicts mixing of a concentrate 12 with a diluent 13 to provide the reagent. The concentrate 12 is in this embodiment contained in a dissolving capsule 15 designed to dissolve during mixing with the diluent 13. The diluent 13 may be acidic or basic depending on the chemistry of the concentrate, and the capsule 15 formed of a material which dissolves in the diluent 13. The diluent 13 may be contained in a mixing well associated with a cover member 14 of the SSM.

In the embodiments of figures 4(b) and 4(c), the concentrate such as 12 is contained in a concentrate dispenser 50 operatively coupled to an instrument for on-board provision of a reagent. The concentrate dispenser 50 includes packaging 52 within which one of a plurality of the concentrate capsules such as 12A to 12F are contained in a stacked cartridge. The stacked cartridge packaging 52 is designed to release each of the capsules such as 12A for mixing with a diluent on-board the instrument to provide a reagent at the required concentration. In the embodiment of figure 4(b) the concentrate dispenser 50 includes a reciprocating release 54 operatively coupled to the stacked cartridge 52 to release a lowermost of the column of capsules such as 12A.

In the embodiment of figure 4(c), the packaging of the concentrate dispenser 50 is in the form of a cartridge reel 52. The cartridge reel contains a roll of the concentrate capsules such as 12A to 12F retained in a concentrate tape 56 dispensed from the cartridge reel 52. The concentrate tape 56 includes two strips 58A and 58B adhered to one another with the concentrate capsules such as 12F sandwiched therebetween. The concentrate dispenser 50 of figure 4(c) also includes a spool 60 for removing the lower strip 58B of the concentrate tape 56 to release each of the concentrate capsules such as 12A from the dispenser 50.

In the embodiment of figure 4(d) the instrument includes a chamber 16 in the form of a disposable or reusable probe tip containing the concentrate 12. The probe tip 16 is designed to fit to a probe such as 44 of the concentrate dispenser. The probe may for example be in the form of a FTP of an instrument used in treating or staining tissue samples. In this case the probe tip 16 includes a nozzle 46 designed to cooperate with a port of for example a cover member of a SSM. The nozzle 46 includes a temporary seal 48 which is designed to rupture on discharge of the concentrate 12 into the well for mixing with the diluent. The concentrate 12 may also be sealed in the probe tip 16 with another seal 49 which is similarly ruptured under the application of pressure applied by the FTP 44.

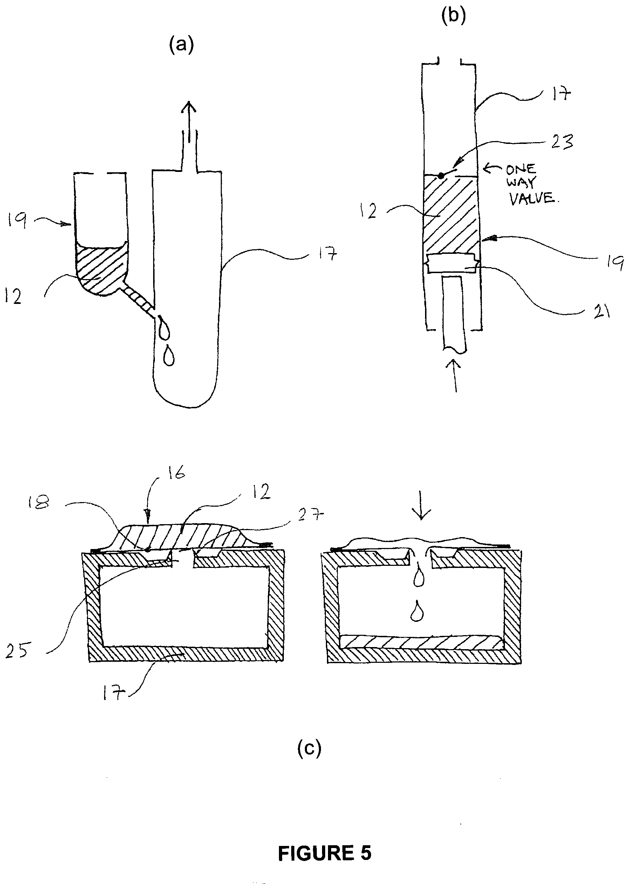

Figures 5(a) to 5(c) illustrate various embodiments of a diluent chamber 17 operatively coupled to a concentrate dispenser 19 for mixing on-board an instrument to produce a reagent. The diluent chamber is in the form of a mixing vial 17 with the concentrate dispenser 19 attached as a single package. In the embodiment of figure 5(a) the diluent vial 17 has a vacuum pressure applied to it for dispensing of the concentrate 12 from the concentrate dispenser 19. In the embodiment of figure 5(b) the concentrate dispenser 19 includes a plunger 21 for urging the concentrate 12 from the concentrate dispenser 19 into the diluent vial 17. The concentrate dispenser 19 may include a one way valve 23 through which the concentrate 12 is discharged into the diluent vial 17. The embodiment of figure 5(c) includes a concentrate dispenser in the form of the packaged chamber 16 such as the embodiments of figure 3(a). The chamber 16 is operatively coupled to the diluent chamber or vial 17 with its sealing membrane 18 in contact with an entrance 25 to the diluent chamber 17. The entrance 25 includes a spiked ridge 27 designed on the application of downward pressure to the chamber 16 to rupture the frangible sealing membrane 18. The concentrate 12 is thus discharged into the diluent chamber 17 for mixing to produce the necessary reagent.

It will be readily understood by those skilled in the art that a concentrate includes liquids of varying concentrations and for example includes high-value reagents and bulk reagents. The FTP of the earlier embodiment may thus extend to dispensing a reagent to be diluted, a diluent, other reagents, or a combination of these liquids.

The instrument in one embodiment may include a controller configured to implement the preferred method of producing a reagent on-board the instrument. The method may be implemented via computer program code including instructions to control movement of a concentrate dispenser in, for example, dispensing a concentrate to a well of a cover member associated with a SSM. The controller may also control dilution and mixing of the concentrate with a diluent to provide the reagent at the required concentration.

Now that several preferred embodiments of the invention have been described it will be apparent to those skilled in the art that the method of producing a reagent on-board an instrument together with the concentrate dispenser and associated packaging has at least the following advantages:
1. The concentration of the reagent produced on-board the instrument can be varied, for example, to achieve the required staining option for tissue samples;
2. The ability to produce reagents on-board an instrument increase workflow flexibility with ease of use, for example by controlling the parameters of the dilution based on the supplied concentrate errors in staining are reduced;
3. On-board dilution lends itself to reagents in a liquid, solid and lyophilised form;
4. On-board dilution improves laboratory workflow without having to pre-dilute reagents from concentrates and also reduces operator time and potential errors.

## Claims

1. A laboratory instrument for treating a biological tissue sample and for producing a reagent for use by the instrument, said instrument including:
a diluent dispenser (44) containing a diluent and configured to be operatively coupled to a concentrate chamber (16) containing a concentrate (12) to dispense the diluent for mixing with the concentrate (12) on the instrument; and
one or more mixing wells (10) located on the instrument and configured to receive the concentrate (12) and the diluent for mixing to produce the reagent at a required concentration;
**characterised in that** the mixing well (10) is formed in a fixed or disposable cover member (14) of a sample staining module (SSM) of the instrument, and wherein the instrument is configured to use the reagent produced for treating a biological tissue sample within the SSM.

2. An instrument according to claim 1 comprising a concentrate dispenser (50), said dispenser (50) including packaging (52) adapted to contain a plurality of concentrate capsules (12A-12F), the packaging (52) configured to release each of the capsules (12A-12F) for mixing with the diluent on the instrument to produce the reagent at the required concentration.

3. An instrument as defined in claim 2 wherein the packaging (52) includes a cartridge (52) adapted to contain one or more columns of the plurality of concentrate capsules (12A-12F) in a stacked arrangement,
wherein the dispenser (50) also includes a reciprocating release (54) operatively coupled to the cartridge (52) to release a lowermost of the column of capsules (12A) from the cartridge (52) for mixing with the diluent on the instrument.

4. An instrument as defined in claim 2 wherein the packaging (52) includes a cartridge reel (52) adapted to contain a roll of the concentrate capsules (12A-12F) retained in a concentrate tape (56) configured to be dispensed from the cartridge reel (52).

5. An instrument as defined in claim 4 wherein the concentrate tape (56) includes two strips (58A, 58B) adhered to one another with the concentrate capsules (12A-12F) sandwiched therebetween and adapted to be released from the concentrate tape (56).

6. An instrument as defined in claim 1 and a concentrate chamber (16) containing a concentrate (12), wherein the diluent dispenser (44) is operatively coupled to the concentrate chamber (16), and wherein the concentrate chamber is a container (13) adapted to contain a predetermined volume of a concentrate (12) for mixing with diluent on the instrument to produce the reagent at the required concentration.

7. An instrument and a concentrate chamber (16) as defined in claim 6 wherein the container is a sealed container (13).

8. An instrument and a concentrate chamber (16) as defined in claim 7 including a sealing membrane (18) for sealing the concentrate (12) and an inert gas in the container (13).

9. An instrument and a concentrate chamber (16) as defined in claim 8 wherein the sealing membrane (18) is designed to be at least partly removed or pierced.

10. A method of producing a reagent on a laboratory instrument for treating a biological tissue sample, said method including the steps of: providing, from a concentrate chamber (16), a concentrate (12) contained in the concentrate chamber (16) to one or more mixing wells (10) of the instrument, wherein the one or more mixing wells (10) are located on the instrument; discharging, from a diluent dispenser (44) of the instrument, a diluent contained in the diluent dispenser (44) to the mixing well (10) for mixing with the concentrate (12) on the instrument; and mixing, in the mixing well (10), the concentrate (12) with the diluent on the instrument to produce the reagent at a required concentration, **characterised in that** the mixing well (10) is formed in a fixed or disposable cover member (14) of a sample staining module (SSM) of the instrument, and using the reagent produced by the instrument for treating a biological tissue sample within the SSM.

11. A method as defined in claim 10 also including diluting the reagent with additional diluent to produce the required concentration.

## Patentansprüche

1. Laborinstrument zur Behandlung einer biologischen Gewebeprobe und zur Herstellung eines Reagenzes zur Verwendung durch das Instrument, wobei das Instrument aufweist:
einen Verdünnungsmittelspender bzw. -dosierer (44), der ein Verdünnungsmittel umfasst und eingerichtet ist, operativ mit einer Konzentratkammer (16), die ein Konzentrat (12) umfasst, gekoppelt zu werden, um das Verdünnungsmittel zum Mischen mit dem Konzentrat (12) auf das Instrument zu geben; und
ein oder mehrere Mischvertiefungen (10), die sich auf dem Instrument befinden und eingerichtet sind, das Konzentrat (12) und das Verdünnungsmittel zum Mischen aufzunehmen, um das Reagenz in einer erforderlichen Konzentration herzustellen;
**dadurch gekennzeichnet, dass** die Mischvertiefung (10) in einem festen bzw. fixierten oder austauschbaren bzw. entfernbaren Abdeckelement (14) eines Probenfärbemoduls (SSM) des Instruments gebildet bzw. ausgebildet ist, und
wobei das Instrument eingerichtet ist, das zur Behandlung einer biologischen Gewebeprobe erzeugte Reagenz innerhalb der SSM zu verwenden.

2. Instrument nach Anspruch 1, umfassend einen Konzentratspender (50), wobei der Spender (50) eine Umhüllung bzw. Verpackung (52) umfasst, die ausgelegt ist, eine Vielzahl von Konzentratkapseln (12A-12F) zu umfassen, wobei die Verpackung (52) eingerichtet ist, jede der Kapseln (12A-12F) zum Mischen mit dem Verdünnungsmittel auf dem Instrument freizugeben, um das Reagenz in der erforderlichen Konzentration herzustellen.

3. Instrument nach Anspruch 2, wobei die Verpackung (52) eine Kartusche (52) umfasst, die ausgelegt ist, eine oder mehrere Säulen der Vielzahl von Konzentratkapseln (12A-12F) in einer gestapelten Anordnung aufzunehmen bzw. zu umfassen,
wobei der Spender (50) auch eine hin- und hergehende bzw. wechselnde Freisetzungseinheit (54) umfasst, die operativ mit der Kartusche (52) gekoppelt ist, um einen untersten Teil der Säule von Kapseln (12A) aus der Kartusche (52) zum Mischen mit dem Verdünnungsmittel auf dem Instrument freizusetzen.

4. Instrument nach Anspruch 2, wobei die Verpackung (52) eine Kartuschenrolle bzw. -spule (52) umfasst, die ausgelegt ist, eine Rolle der Konzentratkapseln (12A-12F) aufzunehmen bzw. zu umfassen, die in einem Konzentratband (56) gehalten wird, das eingerichtet ist, von der Kartuschenrolle (52) abgegeben zu werden.

5. Instrument nach Anspruch 4, wobei das Konzentratband (56) zwei Streifen (58A, 58B) umfasst, die miteinander verklebt sind, wobei die Konzentratkapseln (12A-12F) dazwischen sandwichartig angeordnet und derart eingerichtet sind, dass sie von dem Konzentratband (56) gelöst bzw. freigesetzt werden können.

6. Instrument nach Anspruch 1 und Konzentratkammer (16), die ein Konzentrat (12) enthält, wobei der Verdünnungsmittelspender (44) operativ mit der Konzentratkammer (16) gekoppelt ist, und wobei die Konzentratkammer ein Behälter (13) ist, der geeignet ist, ein vorgegebenes Volumen eines Konzentrats (12) zum Mischen mit einem Verdünnungsmittel auf dem Instrument aufzunehmen, um das Reagenz in der erforderlichen Konzentration herzustellen.

7. Instrument und Konzentratkammer (16) nach Anspruch 6, wobei der Behälter ein versiegelter Behälter (13) ist.

8. Instrument und Konzentratkammer (16) nach Anspruch 7 umfassend eine Dichtmembran (18) zum Abdichten des Konzentrats (12) und eines Inertgases in dem Behälter (13).

9. Instrument und Konzentratkammer (16) nach Anspruch 8, wobei die Dichtmembran (18) derart ausgebildet ist, dass sie zumindest teilweise entfernt oder durchdrungenwerden kann.

10. Verfahren zur Herstellung eines Reagenzes auf einem Laborinstrument zur Behandlung einer biologischen Gewebeprobe, wobei das Verfahren die folgenden Schritte umfasst: Bereitstellen eines in der Konzentratkammer (16) enthaltenen Konzentrats (12) aus einer Konzentratkammer (16) für ein oder mehrere Mischvertiefungen (10) des Instruments, wobei sich die einen oder mehreren Mischvertiefungen (10) auf dem Instrument befinden; Ausgeben, aus einem Verdünnungsmittelspender (44) des Instruments, eines in dem Verdünnungsmittelspender (44) enthaltenen Verdünnungsmittels in die Mischvertiefung (10) zum Mischen mit dem Konzentrat (12) auf dem Instrument; und Mischen des Konzentrats (12) mit dem Verdünnungsmittel in der Mischvertiefung (10) auf dem Instrument, um das Reagenz in einer erforderlichen Konzentration herzustellen, **dadurch gekennzeichnet, dass** die Mischvertiefung (10) in einem festen bzw. fixierten oder austauschbaren bzw. entfernbaren Abdeckelement (14) eines Probenfärbemoduls (SSM) des Instruments gebildet bzw. ausgebildet ist, und dass das durch das Instrument zur Behandlung einer biologischen Gewebeprobe erzeugte Reagenz innerhalb der SSM verwendet wird.

11. Verfahren nach Anspruch 10, umfassend auch das Verdünnen des Reagenzes mit zusätzlichem Verdünnungsmittel, um die erforderliche Konzentration zu erzeugen.

## Revendications

1. Instrument de laboratoire pour traiter un échantillon de tissu biologique et pour produire un réactif destiné à être utilisé par l'instrument, ledit instrument comprenant :
un distributeur de diluant (44) contenant un diluant et configuré pour être couplé de manière opérationnelle à une chambre de concentré (16) contenant un concentré (12) pour distribuer le diluant à mélanger avec le concentré (12) sur l'instrument ; et
un ou plusieurs puits de mélange (10) situés sur l'instrument et configurés pour recevoir le concentré (12) et le diluant pour mélanger afin de produire le réactif à une concentration requise ;
**caractérisé en ce que** le puits de mélange (10) est formé dans un élément de couverture fixe ou jetable (14) d'un module de coloration d'échantillon (SSM) de l'instrument, et dans lequel l'instrument est configuré pour utiliser le réactif produit pour traiter un échantillon de tissu biologique dans le SSM.

2. Instrument selon la revendication 1 comprenant un distributeur de concentré (50), ledit distributeur (50) comprenant un emballage (52) adapté pour contenir une pluralité de capsules de concentré (12A-12F), l'emballage (52) étant configuré pour libérer chacune des capsules (12A-12F) pour les mélanger avec le diluant sur l'instrument pour produire le réactif à la concentration requise.

3. Instrument tel que défini dans la revendication 2, dans lequel l'emballage (52) comprend une cartouche (52) adaptée pour contenir une ou plusieurs colonnes de la pluralité de capsules concentrées (12A-12F) dans un arrangement empilé,
dans lequel le distributeur (50) comprend également un déclencheur alternatif (54) couplé en fonctionnement à la cartouche (52) pour libérer une extrémité inférieure de la colonne des capsules (12A) de la cartouche (52) pour mélanger le diluant de l'instrument.

4. Instrument tel que défini dans la revendication 2, dans lequel l'emballage (52) comprend une bobine de cartouche (52) adaptée pour contenir un rouleau des capsules de concentré (12A-12F) retenues dans un ruban de concentré (56) configuré pour être distribué depuis la bobine de cartouche (52).

5. Instrument tel que défini dans la revendication 4, dans lequel le ruban de concentré (56) comprend deux bandes (58A, 58B) collées l'une à l'autre avec les capsules de concentré (12A-12F) en sandwich entre elles et adaptées pour être libérées du ruban de concentré (56).

6. Instrument tel que défini dans la revendication 1 et une chambre de concentré (16) contenant un concentré (12), dans lequel le distributeur de diluant (44) est couplé de manière opérationnelle à la chambre de concentré (16), et dans lequel la chambre de concentré est un récipient (13) adapté pour contenir un volume prédéterminé d'un concentré (12) à mélanger avec le diluant de l'instrument pour produire le réactif à la concentration requise.

7. Instrument et chambre de concentré (16) tels que définis dans la revendication 6, dans laquelle le récipient est un récipient scellé (13).

8. Instrument et chambre de concentré (16) tels que définis dans la revendication 7 comprenant une membrane d'étanchéité (18) pour sceller le concentré (12) et un gaz inerte dans le récipient (13).

9. Instrument et chambre de concentré (16) tels que définis dans la revendication 8, dans lesquels la membrane d'étanchéité (18) est conçue pour être au moins partiellement enlevée ou percée.

10. Procédé de production d'un réactif sur un instrument de laboratoire pour traiter un échantillon de tissu biologique, ledit procédé comprenant les étapes consistant à : fournir, à partir d'une chambre de concentré (16), un concentré (12) contenu dans la chambre de concentré (16) à un ou plusieurs puits de mélange (10) de l'instrument, dans lequel le ou les puits de mélange (10) sont situés sur l'instrument ; décharger, depuis un distributeur de diluant (44) de l'instrument, un diluant contenu dans le distributeur de diluant (44) vers le puits de mélange (10) pour mélanger avec le concentré (12) de l'instrument ; et mélanger, dans le puits de mélange (10), le concentré (12) avec le diluant sur l'instrument pour produire le réactif à une concentration requise, **caractérisé en ce que** le puits de mélange (10) est formé dans un élément de couverture fixe ou jetable (14) d'un module (SSM) de coloration d'échantillon de l'instrument, et utiliser le réactif produit par l'instrument pour traiter un échantillon biologique dans le SSM.

11. Procédé tel que défini dans la revendication 10, comprenant également la dilution du réactif avec un diluant supplémentaire pour produire la concentration requise.
